# EUROPEAN PATENT SPECIFICATION

(11) **EP 0 439 723 B1**
(45) Date of publication and mention of the grant of the patent: **12.10.1994**
(21) Application number: 90123093.8
(22) Date of filing: 03.12.1990
(51) Int. Cl.: B60L 15/20

(54) **Motor control apparatus of electric motor vehicle**
Motorregelvorrichtung für ein elektrisches Motorfahrzeug
Appareil de commande de moteur pour véhicules automobiles électriques

(30) Priority: 29.01.1990 JP 18553/90
(43) Date of publication of application: 07.08.1991
(73) Proprietor: SUZUKI MOTOR CORPORATION, Shizuoka-ken (JP)
(72) Inventor: Suzuki, Yasuhiro, Hamamatsu-shi, Shizuoka-ken (JP)
(74) Representative: Klingseisen, Franz, Dipl.-Ing.

(56) References cited:
- US-A- 4 284 936
- US-A- 4 555 651
- US-A- 4 691 148

## Description

### Detailed Description of the Invention

### [Industrial Field of Utilization]

The present invention relates to a motor control apparatus of an electric motor vehicle and, more particularly, to a motor control apparatus of an electric motor vehicle suitable for an electric motor wheelchair or the like having a mechanical brake.

### [Background Art]

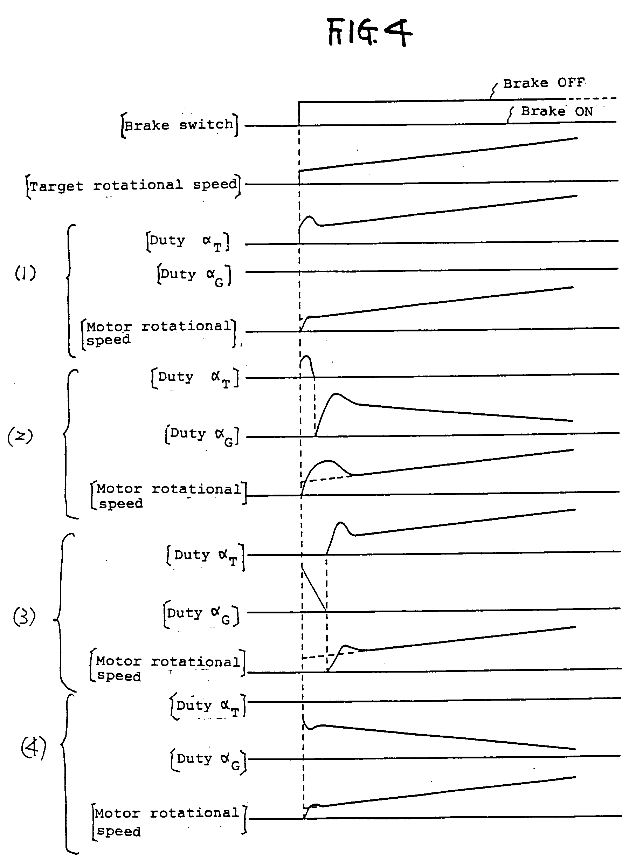

Fig. 5 shows an equivalent circuit of a conventional motor control circuit system. Hitherto, a rotational speed of a motor 50 is controlled by increasing, decreasing, and changing a duty α_{T} of a motor driving chopper 51 and a duty α_{G} of a power generation braking chopper 52 on the basis of a target rotational speed which was calculated on the basis of an acceleration signal from an acceleration signal processing circuit (not shown) and a motor rotational speed from a rotation sensor in accordance with a difference between both of the above rotational speeds, a change ratio of the motor rotational speed, and the like. As will be obvious from Fig. 5, when the motor driving chopper 51 and the power generation braking chopper 52 are simultaneously turned on (ON), the apparatus is short-circuited. Therefore, when one of the choppers is (driven) controlled, the other chopper must be in the rest state (duty is set to zero). On the other hand, a mechanical brake 53 is "ON"/"OFF" controlled by turning "ON"/"OFF" a brake switch 54 (refer to Fig. 4).

Hitherto, when starting from the stop state, the vehicle is started from a motor driving region where the motor driving chopper 51 (duty α_{T}) operates. Figs. 4(1) and 4(2) show conventional characteristics upon starting of the vehicle. Fig. 4(1) shows a state at the start of the vehicle on a flat road. Fig. 4(2) shows a state at the start of the vehicle on a down-slope road.

### [Subjects that the Invention is to solve]

However, in the above conventional example, as will be obvious from Fig. 4(2), the motor rotational speed largely overshoots at the initial stage of the start of the vehicle on a down-slope road. Therefore, for electric motor wheelchairs or the like which are used by a number of physical handicapped persons having heavy troubles or the like, such a state is very dangerous. Particularly, it is especially dangerous to start the wheelchair on the down-slope road in a backward movement state in the case where the wheelchair was stopped on the way of an up-slope road or the like.

In such a case, it is considered that the above problems can be solved as shown in Fig. 4(4) if the wheelchair is started from a power generation braking region where the power generation braking chopper 52 (duty α_{G}) operates. However, in this case, there is an inconvenience such that a delay of the start occurs as shown in Fig. 4(3) on a flat road which occupies almost of the running road.

### [Object of the Invention]

It is an object of the present invention to improve the inconveniences which the foregoing conventional example has and to provide a motor control apparatus of an electric motor vehicle which can reduce a danger upon start of the vehicle on a down-slope road and can avoid a delay of the start of the vehicle on a flat road.

### [Means of Solving the Subjects]

The motor control apparatus according to the invention comprises: a control unit to output a control signal on the basis of an acceleration signal which is output from an acceleration signal processing circuit and an output signal of a rotation sensor to detect a rotational speed of a driving motor; a motor driving circuit to drive the driving motor in accordance with the control signal; and a mechanical brake which is on/off controlled by the control unit. The motor driving circuit is constructed so as to include a motor driving chopper and a power generation braking chopper which are alternatively driven by the control unit. The control unit has a first braking function to turn on the mechanical brake in the case where a reverse movement of the vehicle occurred upon stop of the vehicle, a second braking function to turn on the mechanical brake in the case where the motor rotational speed becomes zero, and a third braking function to turn on the mechanical brake in the case where a predetermined time has elapsed after a stop command signal had been received. Further, the control unit has a stop state storing function to store which one of the first to third braking functions was made operative at the stop of the vehicle, a down-slope start discriminating function to discriminate a down-slope start of the vehicle upon restarting of the vehicle on the basis of the stop state stored and the presence or absence of the forward/backward movement until the restart of the vehicle, and a power generation braking chopper selecting function to select and drive the power generation braking chopper in the case where it is determined that the down-slope start of the vehicle is executed. Due to this, the foregoing object is accomplished.

### [Embodiment]

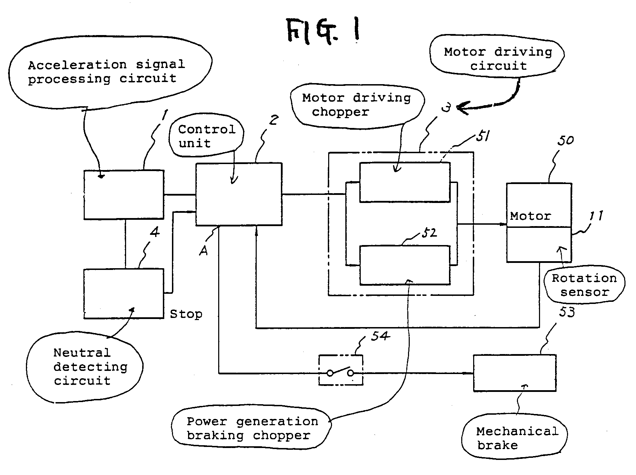

An embodiment of the present invention will be described hereinbelow on the basis of Figs. 1 to 4.

It is now assumed that constructing portions similar to those in the foregoing conventional example are designated by the same reference numerals.

In an electric motor vehicle, actually, a pair of right and left circuits are provided in correspondence to each of a motor for right wheels and a motor for left wheels. However, the embodiment will be described with respect to only one of them.

The embodiment shown in Fig. 1 comprises: an acceleration signal processing circuit 1 which outputs a voltage signal as an acceleration signal in correspondence to an operation amount of an acceleration lever (not shown); a rotation sensor 11 for detecting a rotational speed of the driving motor 50 and outputting a voltage signal corresponding to the motor rotational speed as a rotational speed signal; a control unit 2 for outputting a control signal on the basis of the acceleration signal and the rotational speed signal which are output from the processing circuit 1 and the sensor 11; a motor driving circuit 3 to drive the driving motor 50 in accordance with the control signal; and the mechanical brake 53 which is "ON"/"OFF" controlled by the control unit 2 in a manner as will be explained hereinlater.

The motor driving circuit 3 is constructed so as to include the motor driving chopper 51 and the power generation braking chopper 52 which are alternatively driven by the control unit 2.

Further, a neutral detecting circuit 4 is connected to the control unit 2. On the basis of the acceleration signals which are output from the acceleration signal processing circuit 1 and another acceleration signal processing circuit (not shown), the neutral detecting circuit 4 determines that a stop command has been generated in accordance with a predetermined reference and outputs a stop command signal.

The brake switch 54 which is "ON"/"OFF" controlled by the control unit 2 and turns "OFF"/"ON" the mechanical brake 53 is arranged between the control unit 2 and the mechanical brake 53.

An equivalent circuit of the motor control system in the embodiment is the same as that of the foregoing conventional example.

The motor rotational speed is controlled in the following manner. The control unit 2 calculates a target rotational speed from the acceleration signal. On the basis of the target rotational speed and the motor rotational speed from the rotation sensor 11, the duty α_{T} of the motor driving chopper 51 and the duty α_{G} of the power generation braking chopper 52 are increased, decreased, and changed in accordance with the difference between the target rotational speed and the motor rotational speed, a change ratio of the motor rotational speed, and the like.

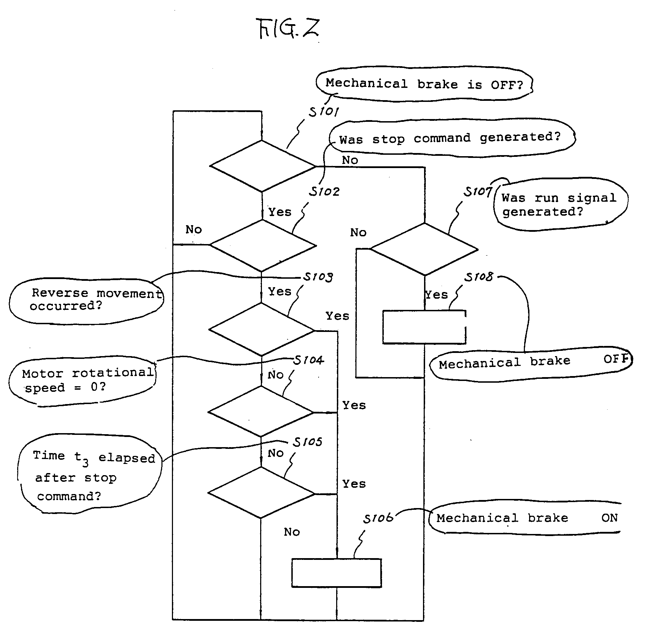

The mechanical brake control operation of the control unit 2 will now be described on the basis of a flowchart of Fig. 2.

First, a CPU (not shown) of the control unit 2 discriminates whether the brake switch 54 is set to the "ON" state or not by a potential at point A in Fig. 1, that is, whether the mechanical brake 53 is set to the "OFF" state or not (step S101). If the mechanical brake 53 is not set to the "OFF" state, namely, if the mechanical brake 53 is set to the "ON" state, a check is made to see if a run command has been generated or not by an output of the acceleration signal processing circuit 1 (S107). If the run command is not generated, it is determined that a stop command has been generated and the processing routine is returned to step S101. On the other hand, if the run command has been generated, the brake switch 54 is turned "ON" and the mechanical brake 53 is turned "OFF" (S108). Due to this, the vehicle can run.

On the other hand, if the mechanical brake 53 is in the "OFF" state in step S101, a check is made to see if a stop command has been generated or not by an output signal of the neutral detecting circuit 4 (S102). If the stop command is not generated, it is decided that the run command has been generated and the processing routine is returned to step S101. Thus, the running state of the vehicle is continued. On the other hand, if the stop command has been generated, a check is made to see if a reverse movement (reverse rotation of the motor) has occurred or not by an output of the rotation sensor 11 (S103). If the reverse movement has occurred, the brake switch 54 is turned "OFF" and the mechanical brake 53 is turned "ON" (S106) [first braking function]. Due to this, the vehicle is stopped upon running on an up-slope road.

On the other hand, if the reverse movement does not occur, a check is made to see if a rotational speed of the motor 50 is equal to zero (0) or not (S104). If the rotational speed of the motor 50 is equal to 0, the mechanical brake 53 is turned "ON" (S106) [second braking function]. Thus, the vehicle is stopped upon running on a flat road.

On the other hand, if the motor rotational speed is not 0, a check is made to see if a predetermined time tₛ has elapsed from the generation of the stop command in step S102 or not (S105). If the predetermined time tₛ does not elapse yet, the processing routine is returned to step S101 and the above operation is repeated. On the other hand, if the predetermined time tₛ has elapsed, the mechanical brake 53 is turned "ON" (S106) [third braking function]. Thus, the vehicle is stopped upon running on a down-slope road.

The reason why the mechanical brake 53 cannot be turned "ON" upon running on an up-slope road by the decision of "the motor rotational speed is 0" as mentioned above is because it takes a time to detect a micro rotational speed of the motor and the reverse movement occurs before it. On the other hand, the reason why the mechanical brake 53 cannot be turned "ON" upon running on a down-slope road by the decision of "the motor rotational speed is equal to 0" is because the vehicle does not stop due to the gravity and the motor rotational speed is not set to 0. Therefore, the vehicle is forcedly stopped after the elapse of the predetermined time tₛ.

In the embodiment, information indicating which one of the first to third braking functions was made operative and the vehicle was stopped is stored into a memory of the control unit 2 (stop state storing function).

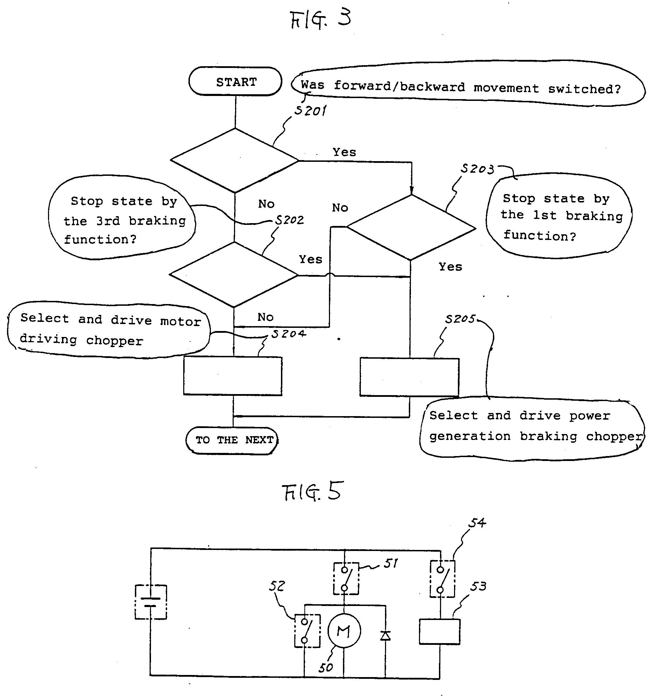

The control operation of the control unit 2 at the start of the vehicle as a feature of the invention will now be described on the basis of a flowchart of Fig. 3.

If the mechanical brake 53 has been turned "OFF" by the run command as mentioned above, the vehicle starts. However, simultaneously with the start of the vehicle, the CPU of the control unit 2 discriminates whether the rotating direction of the motor 50 has been reversed for a period of time until the restart of the vehicle or not by the output of the rotation sensor 11, that is, whether the forward/backward movement has been switch or not (step S201). If it is not switched, a check is made to see if the stop state stored in the memory as mentioned above relates to the stop state due to the third braking function or not, that is, whether the mechanical brake 53 has been turned "ON" due to the elapse of time tₛ after the stop command had been generated or not (S202). If it is not the stop state by the third braking function, a control signal to drive the motor driving chopper is output to the motor driving circuit 3 and the motor driving chopper 51 (duty α_{T}) is selected and driven (S204). Thus, the vehicle is started from the motor driving region. On the other hand, in the case of the stop state by the third braking function, it is determined that the starting state relates to the start of the vehicle on a down-slope road (down-slope start discriminating function), a control signal to drive the power generation braking chopper is output to the motor driving circuit 3, and the power generation braking chopper 52 (duty α_{G}) is selected and driven (S205) [power generation braking chopper selecting function]. Thus, the vehicle is started from the power generation braking region.

On the other hand, if the forward/backward movement has been switched in step S201, a check is made to see of the stop state stored in the memory is the stop state by the first braking function or not, that is, whether the mechanical brake 53 has been turned "ON" by the reverse movement or not (S203). If it is not the stop state by the first braking function, the control signal to drive the motor driving chopper is output to the motor driving circuit 3 and the motor driving chopper 51 is selected and driven (S204). In this case, the vehicle is started from the motor driving region. On the other hand, if the stop state is not the stop state by the first braking function, it is determined that the starting mode is the down-slope start of the vehicle (down-slope start discriminating function). The control signal to drive the power generation braking chopper is output to the motor driving circuit 3 and the power generation braking chopper 52 is selected and driven (S205) [power generation braking chopper selecting function]. In this case, the vehicle is started from the power generation braking region.

Timing charts at the start of the vehicle in the embodiment are shown in Figs. 4(1) and 4(4). Fig. 4(1) shows a starting state of the vehicle on a flat road. Fig. 4(4) shows a starting state of the vehicle upon running on a down-slope road.

According to the embodiment described above, as will be also obvious from Fig. 4(4), upon running on a down-slope road, the vehicle is started from the power generation braking region in which the power generation braking chopper 52 (duty α_{G}) is driven. Therefore, an overshoot of the motor rotational speed at the initial stage of the start of the vehicle on a down-slope road does not occur and the sudden acceleration just after the start of the vehicle can be effectively suppressed. Thus, the danger at the start of the vehicle on a down-slope road can be reduced. On the other hand, as will be also obvious from Fig. 4(1), upon starting of the vehicle on a flat road, the vehicle is started from the motor driving region where the motor driving chopper 51 (duty α_{T}) is driven in a manner similar to the conventional apparatus, so that the delay of the start of the vehicle on a flat road can be also avoided.

When embodying, the invention can be applied even under severe conditions if the control unit 2 is constructed by a microcomputer or the like and an EEPROM or a CMOS-RAM which is backed up by a battery is used as a memory of the control unit 2 and the stop state data is stored into the memory.

### [Effects of the Invention]

Since the invention has been constructed and functioned as mentioned above, according to the invention, the vehicle can be started from the power generation braking region at the start of the vehicle on a down-slope road by the stop state storing function, down-slope start discriminating function, and power generation braking chopper selecting function of the control unit. Therefore, the sudden acceleration just after the start of the vehicle by the overshoot of the motor rotational speed at the initial stage of the start of the vehicle on a down-slope road can be effectively suppressed. Thus, the danger upon starting of the vehicle on a down-slope road can be effectively reduced and at the start of the vehicle on a flat road, the vehicle can be started from the motor driving region in a manner similar to the conventional apparatus. Consequently, it is possible to provide an excellent motor control apparatus of an electric motor vehicle which can avoid the occurrence of the delay of the start of the vehicle on a flat road, which could not be obtained hitherto.

### Brief Explanation of the Drawings

Fig. 1 is a block diagram showing a construction of an embodiment of the invention; Fig. 2 is a flowchart showing a control program of a mechanical brake of a control unit in the embodiment of Fig. 1; Fig. 3 is a flowchart showing a control program at the start of a vehicle for the control unit in the embodiment of Fig. 1; Fig. 4 is a timing chart upon starting of a vehicle; Fig. 4(1) shows the case where the vehicle was started from a motor driving region on a flat road; Fig. 4(2) shows the case where the vehicle was started from the motor driving region at the start of the vehicle on a down-slope road; Fig. 4(3) shows the case where the vehicle was started from a power generation braking region on a flat road; Fig. 4(4) shows the case where the vehicle was started from the power generation braking region at the start of the vehicle on a down-slope road; and Fig. 5 is an equivalent circuit of a conventional motor control system.

1... acceleration signal processing circuit, 2... control unit, 3... motor driving circuit, 4... neutral detecting circuit, 11... rotation sensor, 50... motor, 51... motor driving chopper, 52... power generation braking chopper, 53... mechanical brake.

## Claims

1. A motor control apparatus of an electric motor vehicle comprising:
a control unit (2) to output a control signal on the basis of an acceleration signal which is output from an acceleration signal processing circuit (1) and an output signal of a rotation sensor (11) which detects a rotational speed of the driving motor; a motor driving circuit (3) to drive a driving motor (50) in accordance with the control signal; and a mechanical brake (53) which is on/off controlled by the control unit (2),
wherein the motor driving circuit (3) is constructed so as to include a motor driving chopper (51) and a power generation braking chopper (52) which are alternatively driven by the control unit (2), and
the control unit (2) has a first braking function to turn on the mechanical brake (53) in the case where a reverse movement occurred upon stopping of the vehicle, a second braking function to turn on the mechanical brake (53) in the case where a motor rotational speed becomes zero, and a third braking function to turn on the mechanical brake in the case where a predetermined time has elapsed after a stop command signal had been received,
characterized in that the control unit (2) has a stop state storing function to store which one of the first to third braking functions was made operative upon stopping of the vehicle, a down-slope start discriminating function to discriminate a down-slope start of the vehicle upon restarting of the vehicle on the basis of the stop state which was stored and the presence or absence of the forward/backward movement until the restart of the vehicle, and a power generation braking chopper selecting function to select and drive the power generation braking chopper in the case where it is determined that a down-slope start of the vehicle is executed.

## Patentansprüche

1. Motorregelvorrichtung für ein elektrisches Motorfahrzeug, umfassend
eine Regeleinheit (2) zur Abgabe eines Steuersignals auf der Basis eines Beschleunigungssignals, das von einer Verarbeitungsschaltung (1) für das Beschleunigungssignal abgegeben wird, und eines Ausgangssignals eines Drehzahlsensors (11), der eine Drehzahl des Antriebsmotors feststellt, eine Motorantriebsschaltung (3) für den Antrieb eines Antriebsmotors (50) in Übereinstimmung mit dem Steuersignal, und eine mechanische Bremse (53), die durch die Regeleinheit (2) ein- und ausgeschaltet wird,
wobei die Motorantriebsschaltung (3) so ausgebildet ist, daß sie einen Motorantriebsunterbrecher (51) und einen Unterbrecher (52) zum Bremsen der Leistungserzeugung aufweist, die abwechselnd durch die Regeleinheit (2) betrieben werden, und
wobei die Regeleinheit (2) eine erste Bremsfunktion aufweist, um die mechanische Bremse (53) in dem Falle einzuschalten, in dem beim Anhalten des Fahrzeugs eine Umkehrbewegung auftritt, ferner eine zweite Bremsfunktion zum Einschalten der mechanischen Bremse (53) in dem Fall, in dem die Motordrehzahl Null wird, und eine dritte Bremsfunktion zum Einschalten der mechanischen Bremse in dem Fall, in dem eine vorbestimmte Zeit verstrichen ist, nachdem ein Stopsteuersignal empfangen wurde,
**dadurch gekennzeichnet,**
daß die Regeleinheit (2) eine Speicherfunktion für den Stopzustand aufweist, um zu speichern, welche der ersten bis dritten Bremsfunktionen beim Anhalten des Fahrzeugs betriebsbereit gemacht wurde, ferner eine Unterscheidungsfunktion für einen Start bei abschüssiger Fahrbahn zum Unterscheiden eines Starts des Fahrzeugs bei abschüssiger Fahrbahn beim wiederstarten des Fahrzeugs auf der Basis des Stopzustandes, der gespeichert wurde, und der Anwesenheit oder Abwesenheit der vorwärts/rückwärts-Bewegung bis zum Wiederstart des Fahrzeugs, und eine Auswahlfunktion für den Unterbrecher für die Abbremsung der Leistungserzeugung, um den Unterbrecher für die Abbremsung der Leistungserzeugung in dem Falle auszuwählen und zu betreiben, in dem bestimmt ist, daß ein Start des Fahrzeugs auf abschüssiger Fahrbahn ausgeführt wird.

## Revendications

1. Dispositif de commande de moteur pour véhicule automobile électrique comprenant :
une unité de commande (2) pour émettre en sortie un signal de commande sur la base d'un signal d'accélération produit par un circuit de traitement de signal d'accélération (1) et d'un signal de sortie d'un capteur de rotation (11) qui détecte la vitesse de rotation du moteur d'entraînement ; un circuit d'entraînement de moteur (3) pour entraîner un moteur d'entraînement (50) en fonction du signal de commande ; et un frein mécanique (53) qui est commandé en tout-ou-rien par l'unité de commande (2),
dans lequel le circuit d'entraînement de moteur (3) est constitué de manière à inclure un interrupteur périodique d'entraînement de moteur (51) et un interrupteur périodique de freinage de génération de puissance (52) qui sont excités de manière mutuellement exclusive par l'unité de commande (2), et
l'unité de commande (2) comporte une première fonction de freinage pour mettre en circuit le frein mécanique (53) dans le cas d'un mouvement de recul ayant lieu après l'arrêt du véhicule, une seconde fonction de freinage pour mettre en circuit le frein mécanique (53) dans le cas où la vitesse de rotation du moteur devient nulle, et une troisième fonction de freinage pour mettre en circuit le frein mécanique dans le cas où une durée prédéterminée s'est écoulée après qu'un signal de commande d'arrêt a été reçu,
caractérisé en ce que l'unité de commande (2) comporte une fonction de mise en mémoire d'état d'arrêt pour stocker celle de la première à la troisième fonctions de freinage qui a été opérationnelle à l'arrêt du véhicule, une fonction de discrimination de démarrage sur une pente descendante pour discriminer un démarrage du véhicule sur une pente descendante lors du redémarrage du véhicule sur la base de l'état d'arrêt mis en mémoire, et la présence ou l'absence d'un mouvement de demi-tour jusqu'au redémarrage du véhicule, et une fonction de sélection d'interrupteur périodique de freinage de génération de puissance pour sélectionner et exciter l'interrupteur périodique de freinage de génération de puissance dans le cas où il est déterminé que le démarrage sur une pente descendante du véhicule est exécuté.
